# EUROPÄISCHE PATENTANMELDUNG

(11) **EP 4 730 108 A1**
(43) Veröffentlichungstag der Anmeldung: **22.04.2026**
(21) Anmeldenummer: 24207524.0
(22) Anmeldetag: 18.10.2024
(51) Int. Cl.: G06F 8/41, G06F 12/00, G06N 3/04, G06N 3/10

(54) **VERFAHREN UND VORRICHTUNG ZUR SPEICHERPLANUNG FÜR EINE CODE-GENERIERUNG FÜR EINEN PROGRAMMCODE ZUR BERECHNUNG EINES KÜNSTLICHEN NEURONALEN NETZES IN EINER HARDWAREUMGEBUNG**

(71) Anmelder: Robert Bosch GmbH, 70442 Stuttgart (DE)
(72) Erfinder: Hjort, Ulrik, 21113 Malmö (SE); Vo, Duy Khoi, 70469 Stuttgart (DE); Wagner, Benjamin, 88045 Friedrichshafen (DE); Boblest, Sebastian, 73105 Duernau (DE); Sulaiman, Leif, 22477 Lund (SE); Lochmann, Markus, 72762 Reutlingen (DE)

(57) **Zusammenfassung**

Die Erfindung betrifft ein computer-implementiertes Verfahren zum Durchführen einer Speicherplanung für eine Code-Generierung zur Bestimmung eines Codes für die Berechnung eines neuronalen Netzes, mit folgenden Schritten:
- Bereitstellen (S1) von aufeinanderfolgenden Berechnungsschritten des neuronalen Netzes, wobei für jeden Berechnungsschritt die Größe eines Eingangsdatenblocks (EB1, EB2) und eines Ausgangsdatenblocks (AB1, AB2) bestimmt ist,
- Ermitteln (S2) einer Bedingung für die Speicherplanung für jeden bestimmten Berechnungsschritt, bei dem ein Eingangsdatenblock (EB1) in einem Speicherbereich zumindest teilweise in dem Ausgangsdatenblock (AB2) enthalten ist, wobei die Bedingung angibt, dass der Speicherbereich, der dem Ausgangsdatenblock (AB1) des dem bestimmten Berechnungsschritt vorangehenden Berechnungsschritts zugeordnet wird, in dem Speicherbereich des Ausgangsdatenblocks (Ab2) des bestimmten Berechnungsschritts enthalten ist;
- Durchführen (S3) einer Speicherplanung, in der für jeden Berechnungsschritt der Speicherbereich des jeweiligen Eingangsdatenblocks (EB1, EB2) und Ausgangsdatenblocks (AB1, AB2) im Arbeitsspeicher festgelegt wird, unter Berücksichtigung der ermittelten Bedingungen.

## Beschreibung

### Technisches Gebiet

Die Erfindung betrifft die Implementierung eines Programmcodes auf einer Hardwareumgebung, wie sie beispielsweise als Mikrocontrollergesteuerte Steuergeräte und dergleichen vorkommt. Die Erfindung betrifft weiterhin Verfahren zur Speicherplanung zum Handling von Eingangsdaten, Ausgangsdaten und Netzparametern.

### Technischer Hintergrund

Bestimmte Hardwareumgebungen, wie beispielsweise Mikrocontroller in Steuergeräten, erfordern die Erstellung eines angepassten ausführbaren Programmcodes, um die Eigenheiten und Beschränkungen der bestimmten Hardwareumgebung zu berücksichtigen. So können insbesondere die verfügbare Speichergröße des Arbeitsspeichers, auf die der Mikrocontroller direkt zugreifen kann, beschränkt sein oder Speicherverschiebe- oder -kopieroperationen von einem Flash- oder externen Speicher auf den Arbeitsspeicher hardwarebedingt besonders aufwendig sein.

Die Berechnungsschritte für die Berechnung von entsprechenden Schichten von neuronalen Netzen können einen erheblichen Speicherbedarf benötigen, da für jede Berechnungsschicht ein Eingangsdatenblock, ein Netzwerkparameterblock und ein Ausgangsdatenblock abrufbar und von dem Mikrocontroller nutzbar in dem Arbeitsspeicher gespeichert werden muss.

Bestehende Code-Generatoren legen während der Speicherplanung fest, in welchem Bereich des Arbeitsspeichers die pro Berechnungsschicht benötigten Datenblöcke im Speicher abgelegt werden. Während der Speicherplanung wird neben der Zuordnung der Eingangsdatenblöcke und Ausgangsdatenblöcke zu Speicherbereichen auch den Daten, die während der Berechnung in einer Berechnungsschicht entstehen, ein entsprechender Speicherbereich zugewiesen.

Herkömmliche Code-Generatoren für neuronale Netze gehen üblicherweise davon aus, dass sämtliche Eingangsdatenblöcke und Ausgangsdatenblöcke in komplett separaten Speicherbereichen liegen müssen.

Bei herkömmlichen Verfahren zur Speicherplanung fließen jedoch keine Informationen über die Art der Berechnungsschicht ein. Daher findet keine Berücksichtigung statt, ob ein Ausgangsdatenblock eines Berechnungsschritts einem Teil eines Eingangsdatenblocks eines nachfolgenden Berechnungsschritts entspricht. Dies ist beispielsweise bei einer Berechnung einer Konkatenierungsschicht der Fall, bei der die Konkatenierung zwei Eingangsdatenblöcke miteinander verbindet.

Insbesondere für das Kopieren von Speicherbereichen sowohl von dem Flash- oder externen Speicher in einen Arbeitsspeicher als auch zwischen Speicherbereichen in dem Arbeitsspeicher ist in der Regel eine zeitaufwändige Speicheroperation, so dass die Speicherplanung das Ziel haben muss, die Bearbeitungszeit von Speicheroperationen zu verringern.

Es ist Aufgabe der vorliegenden Erfindung, ein verbessertes Speichermanagement für die Berechnung von künstlichen neuronalen Netzen zur Verfügung zu stellen, bei der die Zahl von Speicheroperationen reduziert werden kann.

### Offenbarung der Erfindung

Diese Aufgabe wird durch das Verfahren zum Durchführen einer Speicherplanung für eine Code-Generierung eines Codes für die Berechnung eines neuronalen Netzes gemäß Anspruch 1 sowie durch die Vorrichtung gemäß dem nebengeordneten Anspruch gelöst.

Weitere Ausgestaltungen sind in den abhängigen Ansprüchen angegeben.

Gemäß einem ersten Aspekt ist ein Computer-implementiertes Verfahren zum Durchführen einer Speicherplanung für eine Code-Generierung zur Bestimmung eines Codes für die Berechnung eines neuronalen Netzes vorgesehen, mit folgenden Schritten:
- Bereitstellen von aufeinanderfolgenden Berechnungsschritten des neuronalen Netzes, wobei für jeden Berechnungsschritt die Größe eines Eingangsdatenblocks und eines Ausgangsdatenblocks bestimmt ist,
- Ermitteln einer Bedingung für die Speicherplanung für jeden bestimmten Berechnungsschritt, bei dem ein Eingangsdatenblock in einem Speicherbereich zumindest teilweise in dem Ausgangsdatenblock enthalten ist, wobei die Bedingung angibt, dass der Speicherbereich, der dem Ausgangsdatenblock des dem bestimmten Berechnungsschritt vorangehenden Berechnungsschritts zugeordnet wird, in dem Speicherbereich des Ausgangsdatenblocks des bestimmten Berechnungsschritts enthalten ist;
- Durchführen einer Speicherplanung, in der für jeden Berechnungsschritt der Speicherbereich des jeweiligen Eingangsdatenblocks und Ausgangsdatenblocks im Arbeitsspeicher festgelegt wird, unter Berücksichtigung der ermittelten Bedingungen.

Insbesondere kann das Durchführen der Speicherplanung das Anwenden eines Optimierungsverfahrens umfassen, bei der die Zielfunktion eine Minimierung der Anzahl der Speicheroperationen berücksichtigt.

Die einzelnen Berechnungsschritte zur Berechnung von Berechnungsschichten eines neuronalen Netzes werden in der Regel auf einer Hardwareumgebung seriell berechnet. Das bedeutet, dass der generierte Code für die Hardwareumgebung eine Reihenfolge festlegt, in der die Eingangsdaten verarbeitet und die Ausgangsdaten des jeweiligen Berechnungsschritts erzeugt werden. Jeder Berechnungsschritt entnimmt die Eingangsdaten aus einem oder mehreren Eingangsdatenblöcken und speichert die resultierenden Ausgangsdaten in einem oder mehreren Ausgangsdatenblöcken. Eingangsdatenblöcke und Ausgangsdatenblöcke stellen Speicherbereiche eines Arbeitsspeichers dar, die einem zusammenhängenden Adressraum entsprechen.

Die Hardwareumgebung umfasst eine Recheneinheit, einen Arbeitsspeicher und einen Datenspeicher. Ein generierter Code zur Berechnung eines neuronalen Netzes wird in Form der Berechnungsschritte in der Recheneinheit ausgeführt, wobei Eingangsdatenblöcke und Ausgangsdatenblöcke in dem Arbeitsspeicher zum Bereitstellen der Eingangsdaten und zum Speichern der Ausgangsdaten verwendet werden. Ein Zugriff auf Daten aus dem Arbeitsspeicher hat kurze Zugriffszeiten, während ein Zugriff auf den Datenspeicher längere Zugriffszeiten benötigt. Eine Speicherplanung hat das Ziel, durch Bereitstellen und Platzieren der Eingangsdatenblöcke und Ausgangsdatenblöcke in dem Arbeitsspeicher die Zugriffszeiten bzw. die gesamte Berechnungsdauer zu reduzieren und gleichzeitig den maximal verfügbaren Speicherplatz des Arbeitsspeichers zu berücksichtigen oder zu beschränken.

Je nach Berechnungsschritten, die zum Berechnen eines neuronalen Netzes ausgeführt werden müssen, treten zwischen den eigentlichen Schichtberechnungen häufig Speicheroperationen auf, die ein Umkopieren oder Verschieben von Speicherbereichen beinhalten. Die Speicheroperationen sind häufig zeitintensiv und weisen einen signifikanten Zeitanteil auf, der nicht von der Größe des zu kopierenden oder zu verschiebenden Speicherbereichs abhängt.

Das obige Verfahren sieht für eine Speicherplanung im Rahmen einer Code-Generierung zur Ermittlung eines Codes zur Berechnung eines neuronalen Netzes vor, für bestimmte Berechnungsschritte, wie z. B. Konkatenation, Slicing und Padding, den Ausgangsdatenblock des vorangehenden Berechnungsschrittes so im Adressbereich des Arbeitsspeichers zu positionieren, dass ein nachfolgender Berechnungsschritt sofort durch entsprechendes Zuweisen eines Adresszeigers (Pointers) durchgeführt werden kann, ohne dass eine Speicheroperation notwendig ist, oder so dass nur eine Speicheroperation mit geringerem Aufwand durchgeführt werden muss.

Somit kann eine Abfolge von zwei Berechnungsschritten hinsichtlich der Platzierung der Speicherbereiche des Ausgangsdatenblocks des vorangehenden Berechnungsschritts und des Speicherbereichs des Eingangsdatenblocks des nachfolgenden Berechnungsschritts so optimiert werden, dass dazwischen keine zeitaufwändige Speicheroperation notwendig ist Insbesondere sieht die Speicherplanung vor, den Ausgangsdatenblock eines vorangehenden Berechnungsschrittes, auf den der bestimmte Berechnungsschritt folgt, so in einem Speicherbereich des Arbeitsspeichers zu platzieren, dass dieser ganz oder teilweise als Ausgangsdatenblock für den bestimmten Berechnungsschritt dienen kann. Mit anderen Worten enthält der Eingangsdatenblock des bestimmten Berechnungsschritts einen nicht zu verändernden Teil des Ausgangsdatenblocks entsprechend der Vorgabe der Speicherplanung, so dass auf eine Speicheroperation verzichtet werden kann und lediglich ein Adresszeiger verwendet werden muss.

Die Speicherplanung kann in an sich bekannter Weise mit einem sogenannten SMT Solver ausgeführt werden. Diese beginnt mit einer Liste an aufeinanderfolgenden Berechnungsschritten, die das neuronale Netz definieren, und zugehörigen noch nicht einem Adressbereich in dem Arbeitsspeicher zugeordneten Speicherbereichen der Eingangsdatenblöcke und der Ausgangsdatenblöcke. Diese sind lediglich durch ihre Größe bestimmt. Jedem Paar aus zwei, nicht notwendigerweise direkt, aufeinanderfolgenden Berechnungsschritten werden entsprechende Bedingungen zum SMT Solver hinzugefügt, die angeben, ob der Ausgangsdatenblock und der Eingangsdatenblock in dem gleichen Adressbereich positioniert werden sollen.

Solange es sich bei dem Berechnungsschritt nicht um eine Konkatenation, ein Slicing oder ein Padding handelt und die Ablage des jeweiligen Eingangsdatenblocks zeilenweise erfolgen kann, müssen die Speicherbereiche für den Eingangsdatenblock und Ausgangsdatenblock jedes Berechnungsschritts distinkt abgelegt werden.

Es kann vorgesehen sein, dass, wenn der bestimmte Berechnungsschritt ein Konkatenierungsschritt ist, die Bedingung angibt, dass ein oder mehrere diesem vorausgehenden Berechnungsschritte einen Ausgangsdatenblock in einem Speicherbereich bereitstellen, der sich unmittelbar an einem Speicherbereich anschließt, mit dem die Ausgangsdaten des vorangegangenen Berechnungsschritts in dem Konkatenierungsschritt verbunden werden sollen.

Es kann vorgesehen sein, dass, wenn der bestimmte Berechnungsschritt ein Padding-Schritt ist, die Bedingung angibt, dass ein diesem vorausgehender Berechnungsschritt einen Ausgangsdatenblock in einem Speicherbereich bereitstellt, der sich unmittelbar an Speicherbereiche anschließt, die mit einem Padding-Muster belegt sind oder anschließend mit einem Padding-Muster beschrieben werden.

Es kann vorgesehen sein, dass, wenn der bestimmte Berechnungsschritt ein Slicing-Schritt ist, die Bedingung angibt, dass ein diesem vorausgehender Berechnungsschritt einen Ausgangsdatenblock in einem Speicherbereich bereitstellt, der teilweise dem Ausgangsdatenblock des bestimmten Berechnungsschrittes entspricht.

Ist ein bestimmter Berechnungsschritt eine Konkatenation, ein Slicing oder ein Padding, wird versucht, den Ausgangsdatenblock für einen vorangehenden Berechnungsschritt so zu platzieren, dass entsprechende weitere dem Eingangsdatenblock des bestimmten Berechnungsschritts zugehörige Speicherbereiche unmittelbar oberhalb oder unterhalb (im Adressraum) zu dem Ausgangsdatenblock des vorangehenden Berechnungsschritts angeordnet sind (Konkatenation).

Bei einem bestimmten Berechnungsschritt, der einem Padding entspricht, sind Speicherbereiche, die mit einem Padding-Muster belegt sind, oberhalb oder unterhalb des Ausgangsdatenblocks anordenbar sind.

Bei einem bestimmten Berechnungsschritt, der einem Slicing entspricht, wird als Eingangsdatenblock ein Ausschnitt aus dem betreffenden Ausgangsdatenblock des vorangehenden Berechnungsschritts angenommen wird, was durch entsprechende Adress- und Größenzuweisung erfolgen kann. Eine Kopieroperation ist nicht notwendig, da der Ausgangsdatenblock einem Teil des Eingangsdatenblocks entspricht.

### Kurzbeschreibung der Zeichnungen

Ausführungsformen werden nachfolgend anhand der beigefügten Zeichnungen näher erläutert. Es zeigen:
- Figur 1: eine schematische Darstellung einer Plattform zur Code-Generierung und Implementierung in einer Hardwareumgebung;
- Figur 2: zeigt schematisch ein Flussdiagramm zur Veranschaulichung eines Verfahrens zur Speicherplanung für Berechnungsschritte, die eine Konkatenation, ein Slicing oder ein Padding beinhalten; und
- Figuren 3a und 3b: schematische Darstellungen einer bevorzugten Speicherplanung für zwei aufeinanderfolgende Berechnungsschritte eines neuronalen Netzwerks ohne und mit Anwendung des Verfahrens der Figur 2.

Beschreibung von Ausführungsformen

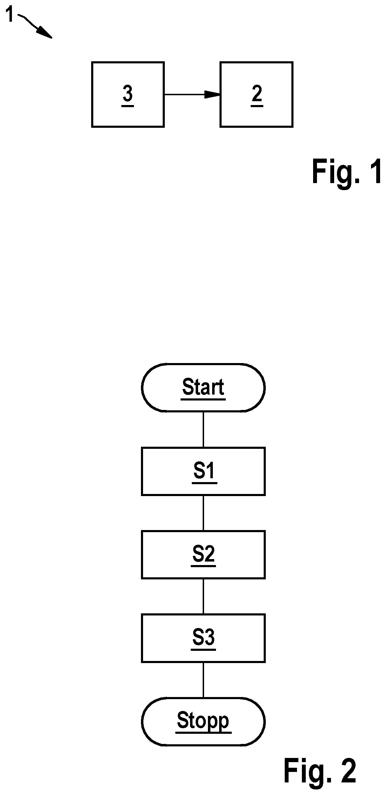

Figur 1 zeigt ein Blockdiagramm einer Plattform 1 zur Durchführung einer Code-Generierung und Implementieren eines generierten Programmcodes in einer Hardwareumgebung 2. Die Hardwareumgebung entspricht z.B. einem Steuergerät mit einem Microcontroller, Mikroprozessor oder dergleichen. Die Code-Generierung erfolgt auf einem herkömmlichen Computer 3 oder Workstation unter Vorgabe der Konfiguration eines neuronalen Netzes. Der Computer 3 ist eingerichtet, eine Speicherplanung und eine Code-Generierung durchzuführen, wobei die Speicherplanung zunächst für die einzelnen Berechnungsschritte des neuronalen Netzes eine Platzierung von Speicherbereichen zur Aufnahme mindestens eines Eingangsdatenblockes, und mindestens eines Ausgangsdatenblockes durchführt. Der Modellparameterblock umfasst alle Modellparameter, die für die Berechnung des jeweiligen Berechnungsschrittes benötigt werden, z.B. Gewichtungen, Bias-Werte einer Fully-Connected-Schicht.

Ist der Code generiert, wird dieser an die Hardwareumgebung 2 übertragen und dort implementiert bzw. ausgeführt.

Im Rahmen des nachfolgend beschriebenen Verfahrens zur Speicherplanung kann nun vorgesehen sein, die Speicherbereiche von Eingangsdatenblöcken und Ausgangsdatenblöcken für Berechnungsschritte so in den Adressbereich des Arbeitsspeichers zu platzieren, dass für den bestimmten Berechnungsschritt ein Zugriff zumindest teilweise überlappend zu dem Speicherbereich eines Eingangsdatenblocks für den Berechnungsschritt vorzusehen. Dadurch kann in erheblichem Maße Speicherplatz des Arbeitsspeichers eingespart werden.

Figur 2 zeigt schematisch den Ablauf einer Speicherplanung mithilfe eines SMT Solvers.

In Schritt S1 werden zunächst aufeinanderfolgende Berechnungsschritten zur Berechnung eines neuronalen Netzes vorgegeben, denen jeweils einem Eingangsdatenblock und einem Ausgangsdatenblock als Speicherbereiche mit definierten Größen zugeordnet sind.

In Schritt S2 werden bestimmte Berechnungsschritte identifiziert, die eine Konkatenation, ein Slicing oder ein Padding beinhalten. Diese bestimmten Berechnungsschritte haben die Eigenschaft, dass zumindest Teile des Ausgangsdatenblocks eines vorangehenden Berechnungsschritts in dem Eingangsdatenblock enthalten sind oder diesem vollständig entsprechen.

Daraus können für die Speicherplanung Bedingungen für bestimmte Berechnungsschritte abgeleitet werden.

Die Bedingungen können lauten:
- Für einen Konkatenierungsschritt soll ein diesem vorausgehender Berechnungsschritt einen Ausgangsdatenblock in einem Speicherbereich bereitstellen, der sich unmittelbar an einem Speicherbereich anschließt, mit dem die Ausgangsdaten des vorangegangenen Berechnungsschritts verbunden werden sollen.
- Für einen Padding-Schritt soll ein diesem vorausgehender Berechnungsschritt ein Ausgangsdatenblock in einem Speicherbereich bereitstellen, der sich unmittelbar an Speicherbereiche anschließt, die mit einem Padding-Muster belegt sind oder die mit einem Padding-Muster beschrieben werden können.
- Für einen Slicing-Schritt soll dieser den zugehörigen Eingangsdatenblock in einem Adressbereich festlegen, der dem auszuwählenden Abschnitt der Ausgangsdaten im Ausgangsdatenblock des vorangegangenen Berechnungsschritts entsprechen.
- Die übrigen Arten von Berechnungsschritte sollen die Speicherbereiche für den Eingangsdatenblock und Ausgangsdatenblock in distinkte Speicherbereiche platzieren.

Jedem Speicherbereich wird eine Lebensdauer zugeordnet, die festlegt, wie lange insbesondere für welche Anzahl von darauffolgenden Berechnungsschritten die Datenelemente des Speicherbereichs nicht überschrieben werden dürfen und somit angeben, dass die Speicherbereiche belegt sind, bis diese nicht länger benötigt werden.

In Schritt S3 wird eine Speicherplanung mithilfe eines SMT Solvers durchgeführt. Die Optimierung hat das Ziel die Anzahl an zeitaufwändigen Speicheroperationen zu reduzieren.

Dabei wird für jeden Berechnungsschritt, der einem der oben genannten Berechnungsschritte vorausgeht, der Ausgangsdatenblock so positioniert, dass eine mit dem bestimmten Berechnungsschritt in Verbindung stehende Ergänzung des Datenspeicherbereichs möglich ist. Dies ist bei der Konkatenation ein weiterer Speicherbereich, der mit dem Speicherbereich des Ausgangsdatenblocks des vorangehenden Berechnungsschritts verbunden werden soll, oder bei einem Padding, d.h. das Anfügen eines Padding-Musters oberhalb und unterhalb des Speicherbereichs des Ausgangsdatenblocks des vorangehenden Berechnungsschrittes der Fall.

Im Falle des Slicings definiert sich der Eingangsdatenblock für den bestimmten Berechnungsschritt als Teilmenge des Speicherbereichs des Ausgangsdatenblocks des vorangegangenen Berechnungsschrittes.

Insbesondere bei begrenztem Arbeitsspeicher kann es nicht immer möglich sein, alle bestimmten Berechnungsschritte in der oben beschriebenen Weise hinsichtlich der Zahl der Speicheroperationen zu optimieren. Es kann daher ein iteratives Optimierungsverfahren mit dem SMT Solver durchgeführt werden, das für die bestimmten Berechnungsschritte unterschiedliche Speicherbereiche des Ausgangsdatenblocks des vorangehenden Berechnungsschritts zuordnet.

Die bestmögliche Optimierung liegt dann vor, wenn für alle bestimmten Berechnungsschritte der Ausgangsdatenblock des vorangehenden Berechnungsschritts so in einen Speicherbereich des Arbeitsspeichers geschrieben wird, dass keine Kopieroperation der Daten des Ausgangsdatenblocks des vorangehenden Berechnungsschrittes durchgeführt werden muss, um die Ausgangsdaten der Daten des Ausgangsdatenblocks des bestimmten Berechnungsschritts zu erhalten. Hierzu soll lediglich eine entsprechende Adresszuweisung (Pointer) zur Definition der Daten des Ausgangsdatenblocks des bestimmten Berechnungsschritts vorgenommen werden.

Anschließend wird die Speicherplanung verwendet, um eine Code-Generierung vorzunehmen.

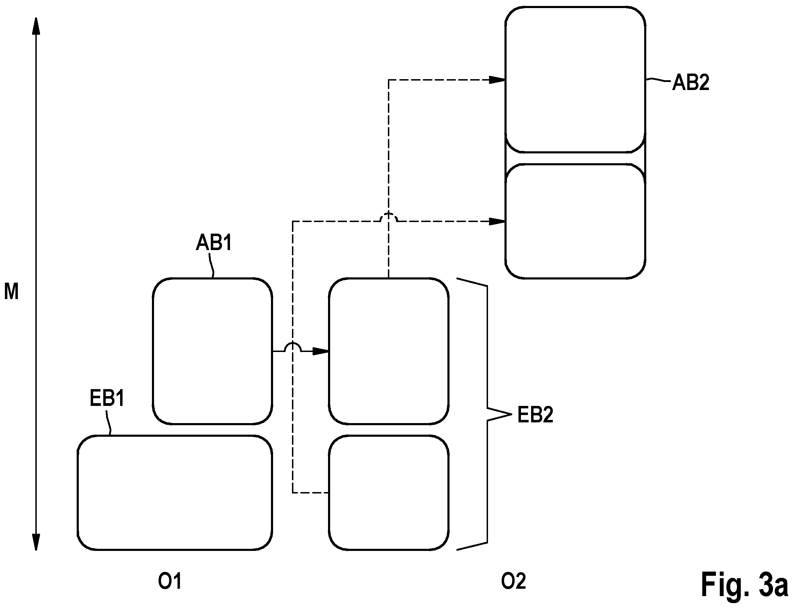

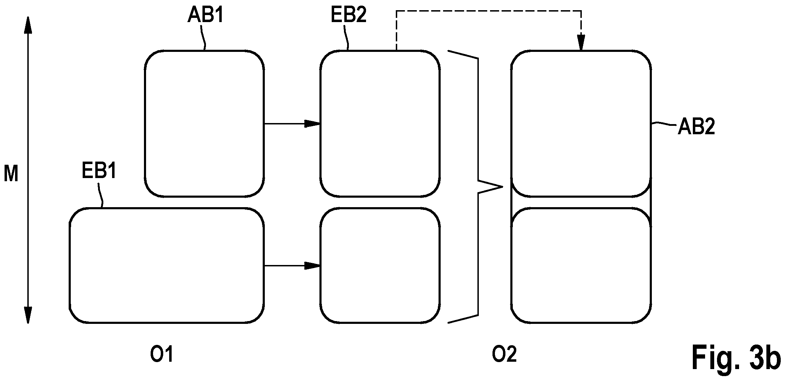

Figur 3a und 3b veranschaulichen die Positionierung der Speicherbereiche für die Eingangs- und Ausgangsdatenblöcke EB1, EB2, AB1, AB2 im Falle einer Convolution-Schicht, gefolgt von einer Konkatenierungsschicht, die den Eingangsdatenblock EB1 verknüpft. Man erkennt in Figur 3a, dass der Ausgangsdatenblock der Convolution-Schicht weitere Eingangsdaten für die Konkatenierungsschicht ergänzt, wobei jedoch eine weitere Kopieroperation erfolgt, um den Ausgangsdatenblock der Konkatenierungsschicht bereitzustellen.

In Figur 3b ist dargestellt, dass der Ausgangsdatenblock AB1 der Convolution-Schicht vollständig im Adressbereich des Speicherbereichs des Eingangsdatenblocks EB2 der Konkatenierungsschicht liegt und dass zum Bereitstellen des Ausgangsdatenblocks AB2 keine Kopieroperation notwendig ist, da der Eingangsdatenblocks EB2 Teil des Ausgangsdatenblocks AB2ist.

## Patentansprüche

1. Computer-implementiertes Verfahren zum Durchführen einer Speicherplanung für eine Code-Generierung zur Bestimmung eines Codes für die Berechnung eines neuronalen Netzes, mit folgenden Schritten:
- Bereitstellen (S1) von aufeinanderfolgenden Berechnungsschritten des neuronalen Netzes, wobei für jeden Berechnungsschritt die Größe eines Eingangsdatenblocks (EB1, EB2) und eines Ausgangsdatenblocks (AB1, AB2) bestimmt ist,
- Ermitteln (S2) einer Bedingung für die Speicherplanung für jeden bestimmten Berechnungsschritt, bei dem ein Eingangsdatenblock (EB1) in einem Speicherbereich zumindest teilweise in dem Ausgangsdatenblock (AB2) enthalten ist, wobei die Bedingung angibt, dass der Speicherbereich, der dem Ausgangsdatenblock (AB1) des dem bestimmten Berechnungsschritt vorangehenden Berechnungsschritts zugeordnet wird, in dem Speicherbereich des Ausgangsdatenblocks (Ab2) des bestimmten Berechnungsschritts enthalten ist;
- Durchführen (S3) einer Speicherplanung, in der für jeden Berechnungsschritt der Speicherbereich des jeweiligen Eingangsdatenblocks (EB1, EB2) und Ausgangsdatenblocks (AB1, AB2) im Arbeitsspeicher festgelegt wird, unter Berücksichtigung der ermittelten Bedingungen.

2. Verfahren nach Anspruch 1, wobei das Durchführen der Speicherplanung das Anwenden eines Optimierungsverfahrens umfasst, bei der die Zielfunktion eine Minimierung der Anzahl der Speicheroperationen berücksichtigt.

3. Verfahren nach Anspruch 1 oder 2, wobei der Eingangsdatenblock (EB1, EB2) und der Ausgangsdatenblock (AB1, AB2) jeweils einen Speicherbereich angeben oder diesem zugeordnet sind, der aufeinanderfolgend aufsteigende Adressen aufweist.

4. Verfahren nach einem der Ansprüche 1 bis 3, wobei, wenn der bestimmte Berechnungsschritt ein Konkatenierungsschritt ist, die Bedingung angibt, dass ein diesem vorausgehender Berechnungsschritt einen Ausgangsdatenblock (AB1, AB2) in einem Speicherbereich bereitstellt, der sich unmittelbar an einem Speicherbereich anschließt, mit dem die Ausgangsdaten des vorangegangenen Berechnungsschritts in dem Konkatenierungsschritt verbunden werden sollen.

5. Verfahren nach einem der Ansprüche 1 bis 4, wobei, wenn der bestimmte Berechnungsschritt ein Padding-Schritt ist, die Bedingung angibt, dass ein diesem vorausgehender Berechnungsschritt einen Ausgangsdatenblock in einem Speicherbereich bereitstellt, der sich unmittelbar an Speicherbereiche anschließt, die mit einem Padding-Muster belegt sind oder anschließend mit einem Padding-Muster beschrieben werden.

6. Verfahren nach einem der Ansprüche 1 bis 5, wobei, wenn der bestimmte Berechnungsschritt ein Slicing-Schritt ist, die Bedingung angibt, dass ein diesem vorausgehender Berechnungsschritt einen Ausgangsdatenblock in einem Speicherbereich bereitstellt, der teilweise dem Ausgangsdatenblock der bestimmten Berechnungsschrittes entspricht.

7. Verfahren nach einem der Ansprüche 1 bis 6, wobei eine Code-Generierung für die Hardwareumgebung (2) basierend auf dem Ergebnis der Speicherplanung durchgeführt und dort implementiert wird.

8. Vorrichtung zur Durchführung eines der Verfahren nach einem der Ansprüche 1 bis 7.

9. Computerprogrammprodukt, umfassend Befehle, die bei der Ausführung des Programms durch mindestens eine Datenverarbeitungseinrichtung diese veranlassen, die Schritte des Verfahrens nach einem der Ansprüche 1 bis 7 auszuführen.

10. Maschinenlesbares Speichermedium, umfassend Befehle, die bei der Ausführung durch mindestens eine Datenverarbeitungseinrichtung diese veranlassen, die Schritte des Verfahrens nach einem der Ansprüche 1 bis 7 auszuführen.

## Geänderte Patentansprüche

### Geänderte Patentansprüche gemäss Regel 137(2) EPÜ.

1. Computer-implementiertes Verfahren zum Durchführen einer Speicherplanung für eine Code-Generierung zur Bestimmung eines Codes für die Berechnung eines neuronalen Netzes, mit folgenden Schritten:
- Bereitstellen (S1) von aufeinanderfolgenden Berechnungsschritten des neuronalen Netzes, wobei für jeden Berechnungsschritt die Größe eines Eingangsdatenblocks (EB1, EB2) und eines Ausgangsdatenblocks (AB1, AB2) bestimmt ist,
- Ermitteln (S2) einer Bedingung für die Speicherplanung für jeden bestimmten Berechnungsschritt, bei dem ein Eingangsdatenblock (EB1) in einem Speicherbereich zumindest teilweise in dem Ausgangsdatenblock (AB2) enthalten ist, wobei die Bedingung angibt, dass der Speicherbereich, der dem Ausgangsdatenblock (AB1) des dem bestimmten Berechnungsschritt vorangehenden Berechnungsschritts zugeordnet wird, in dem Speicherbereich des Ausgangsdatenblocks (Ab2) des bestimmten Berechnungsschritts enthalten ist;
- Durchführen (S3) einer Speicherplanung, in der für jeden Berechnungsschritt der Speicherbereich des jeweiligen Eingangsdatenblocks (EB1, EB2) und Ausgangsdatenblocks (AB1, AB2) im Arbeitsspeicher festgelegt wird, unter Berücksichtigung der ermittelten Bedingungen.
**dadurch gekennzeichnet,**
- **dass**, wenn der bestimmte Berechnungsschritt ein Padding-Schritt ist, die Bedingung angibt, dass ein diesem vorausgehender Berechnungsschritt einen Ausgangsdatenblock in einem Speicherbereich bereitstellt, der sich unmittelbar an Speicherbereiche anschließt, die mit einem Padding-Muster belegt sind oder anschließend mit einem Padding-Muster beschrieben werden; und/oder
- **dass**, wenn der bestimmte Berechnungsschritt ein Slicing-Schritt ist, die Bedingung angibt, dass ein diesem vorausgehender Berechnungsschritt einen Ausgangsdatenblock in einem Speicherbereich bereitstellt, der teilweise dem Ausgangsdatenblock der bestimmten Berechnungsschrittes entspricht.

2. Verfahren nach Anspruch 1, wobei das Durchführen der Speicherplanung das Anwenden eines Optimierungsverfahrens umfasst, bei der die Zielfunktion eine Minimierung der Anzahl der Speicheroperationen berücksichtigt.

3. Verfahren nach Anspruch 1 oder 2, wobei der Eingangsdatenblock (EB1, EB2) und der Ausgangsdatenblock (AB1, AB2) jeweils einen Speicherbereich angeben oder diesem zugeordnet sind, der aufeinanderfolgend aufsteigende Adressen aufweist.

4. Verfahren nach einem der Ansprüche 1 bis 3, wobei, wenn der bestimmte Berechnungsschritt ein Konkatenierungsschritt ist, die Bedingung angibt, dass ein diesem vorausgehender Berechnungsschritt einen Ausgangsdatenblock (AB1, AB2) in einem Speicherbereich bereitstellt, der sich unmittelbar an einem Speicherbereich anschließt, mit dem die Ausgangsdaten des vorangegangenen Berechnungsschritts in dem Konkatenierungsschritt verbunden werden sollen.

5. Verfahren nach einem der Ansprüche 1 bis 4, wobei eine Code-Generierung für die Hardwareumgebung (2) basierend auf dem Ergebnis der Speicherplanung durchgeführt und dort implementiert wird.

6. Vorrichtung zur Durchführung eines der Verfahren nach einem der Ansprüche 1 bis 5.

7. Computerprogrammprodukt, umfassend Befehle, die bei der Ausführung des Programms durch mindestens eine Datenverarbeitungseinrichtung diese veranlassen, die Schritte des Verfahrens nach einem der Ansprüche 1 bis 5 auszuführen.

8. Maschinenlesbares Speichermedium, umfassend Befehle, die bei der Ausführung durch mindestens eine Datenverarbeitungseinrichtung diese veranlassen, die Schritte des Verfahrens nach einem der Ansprüche 1 bis 5 auszuführen.
